# FASCICULE DE BREVET EUROPEEN

(11) **EP 1 041 403 B1**
(45) Date de publication et mention de la délivrance du brevet: **10.12.2003**
(21) Numéro de dépôt: 00400766.2
(22) Date de dépôt: 20.03.2000
(51) Int. Cl.: G01V 1/143

(54) **Vibrateur compact et méthode de surveillance ou de prospection sismique utilisant un tel vibrateur**
Kompakter seismischer Vibrator und Verfahren zur seiner Verwendung in seismische Überwachung und Prospektion
Compact seismic vibrator and method for its application in seismic surveillance or prospecting

(30) Priorité: 30.03.1999 FR 9904001
(43) Date de publication de la demande: 04.10.2000
(73) Titulaire: COMPAGNIE GENERALE DE GEOPHYSIQUE, F-91341 Massy Cédex (FR); GAZ DE FRANCE (SERVICE NATIONAL), F-75840 Paris (FR); Institut Français du Pétrole, 92852 Rueil-Malmaison Cedex (FR)
(72) Inventeur: Meynier, Patrick, 78400 Chatou (FR)

(56) Documents cités:
- EP-A- 0 327 372
- US-A- 3 110 825
- US-A- 5 005 665
- US-A- 5 360 951
- US-A- 5 724 311

## Description

La présente invention concerne un vibrateur électromécanique compact et une méthode de mise en oeuvre.

Une tel vibrateur trouve des applications notamment dans le cadre d'opérations d'exploration sismique où l'on forme des images sismiques d'une formation souterraine à explorer à partir d'ondes élastiques captées par des récepteurs sismiques appropriés, ces ondes étant renvoyées par les discontinuités du sous-sol en réponse à des ondes émises par une source qu'il s'agisse d'une source impulsionnelle : charge d'explosifs dans un trou, canons à air remorqués par un navire en mer, etc., ou des vibrateurs émettant des signaux de durée variable, généralement à fréquence variable. La variation de fréquence peut être continue sur une certaine plage de fréquence (balayage ou « sweep ») comme décrit dans le brevet US 2 688 124 ou bien à variation discontinue à codage binaire comme dans le brevet FR 2 589 587.

Les vibrateurs peuvent être par exemple de type électromagnétique ou électro-hydraulique ou bien encore piézo-électrique. Un vibrateur de type piézo-électrique comporte généralement une plaque de base couplée avec le sol, une masse d'inertie relativement lourde couplée avec le pavillon par l'intermédiaire d'un ou plusieurs transducteurs piézo-électriques. Chaque transducteur comporte par exemple un barreau réalisé d'une seule pièce ou par empilement de disques en céramique piézo-électrique couplés en série, et il est connecté à un générateur de signaux vibratoires modulés en fréquence ou en phase. Un vibrateur piézo-électrique est décrit par exemple dans le brevet US 5 005 665.

Pour obtenir une force et une amplitude vibratoire suffisante, il est nécessaire d'utiliser des piliers de céramique de longueur relativement importante, de l'ordre de lm dans la pratique. Du fait de cet étagement, la lourde masse d'inertie est placée relativement haut si bien que le vibrateur est instable et mal adapté à fonctionner sur terrain pentu même légèrement sans un ancrage préalable. En outre, les piliers de céramique de longueur importante se révèlent plus fragiles. Ce problème est résolu par un dispositif selon la revendication I et une méthode selon la revendication II.

Par le brevet US 3 110 825, on connaît un vibrateur destiné à fonctionner dans l'eau, qui comporte un premier transducteur constitué d'un pilier tubulaire piézo-électrique interposé entre un pavillon et une plaque, un deuxième transducteur tubulaire piézo-électrique enfermé dans l'espace intérieur formé par le premier et un générateur adapté à leur appliquer des signaux de commande tels que le vibrateur fonctionne en quart d'onde.

Le dispositif selon l'invention est adapté à émettre des ondes sismiques dans un milieu solide. Il comporte un vibrateur électro-mécanique pourvu d'un pavillon destiné à être couplé en opération avec une seule surface de ce milieu solide, de moyens vibratoires comportant au moins deux transducteurs électromécaniques avec chacun au moins un élément moteur allongé, chaque élément moteur du premier transducteur reliant rigidement le pavillon à une plaque-relais et chaque élément moteur du deuxième transducteur étant, par une première extrémité, fixé rigidement à la plaque-relais, et par son extrémité opposée, relié à une deuxième plaque laquelle est disposée entre le pavillon et la plaque-relais, et un générateur d'excitation.

Il est caractérisé essentiellement en ce que la deuxième plaque est une masse d'inertie suffisamment lourde, le générateur d'excitation est adapté à appliquer respectivement aux transducteurs, des signaux vibratoires déphasés les uns par rapport aux autres, de façon à mettre sensiblement en phase les déplacements de la plaque relais et du pavillon et maximiser le mouvement relatif du pavillon par rapport à la masse d'inertie.

Suivant un mode de réalisation, le vibrateur comporte un couple de transducteurs disposés d'un même côté d'une plaque-relais relais et couplés rigidement à elle, chaque élément moteur du deuxième transducteur reliant rigidement la plaque-relais à la masse d'inertie.

Suivant un autre mode de réalisation, le vibrateur comporte au moins deux couples de transducteurs, les transducteurs de chaque couple étant disposés d'un même côté d'une plaque-relais et couplés rigidement à elle, chaque élément moteur du deuxième transducteur étant par une première extrémité connecté rigidement à la plaque-relais et par son extrémité opposée, relié à la masse d'inertie par l'intermédiaire du deuxième couple de transducteurs et de plaques-relais.

Suivant un mode de réalisation préféré, les transducteurs électromécaniques comportent chacun ou plusieurs piliers réalisés en un matériau de type piézo-électrique ou magnétostrictif.

Avec un tel agencement d'au moins un couple de transducteurs électromécaniques avec des éléments moteurs de longueur limitée, couplés et conjugués par l'intermédiaire d'une ou plusieurs plaque-relais, la masse d'inertie peut être ramenée tout près du pavillon, on obtient un vibrateur à la fois très robuste et très stable d'encombrement réduit en hauteur.

De préférence, chaque transducteur comporte plusieurs éléments moteurs allongés disposés parallèlement et connectés en parallèle aux moyens de déphasage.

Suivant un mode préféré de réalisation, on diminue l'encombrement du vibrateur en ménageant un ou plusieurs évidements au travers de la masse d'inertie pour où passent les éléments moteurs de chaque transducteur.

Suivant un autre mode préféré de réalisation, au moins un logement est ménagé dans la masse d'inertie de façon qu'une partie de la longueur des éléments moteurs du deuxième transducteur soit logée dans son épaisseur.

De préférence, le générateur d'excitation comporte des moyens de connexion permettant une excitation séparée des deux transducteurs de chaque couple avec des signaux d'excitation modulables en amplitude et en phase.

Dans des applications où le critère de stabilité n'est pas particulièrement recherché, il est possible d'utiliser un vibrateur comportant au moins trois transducteurs électromécaniques interconnectant le pavillon et la masse d'inertie, ces transducteurs étant reliés les uns aux autres par l'intermédiaire d'au moins deux plaques-relais, le générateur d'excitation étant connecté aux différents transducteurs par l'intermédiaire de moyens de déphasage adaptés à leur appliquer respectivement des signaux d'excitation déphasés les uns par rapport aux autres, de façon à conjuguer les signaux vibratoires émis par les différents transducteurs.

Dans certaines applications où le vibrateur doit être placé dans une cavité prolongée par un puits d'exploitation d'un gisement, le pavillon, la masse d'inertie et chaque plaque-relais peuvent être pourvus d'un évidemment central pour le passage d'un tubing.

La méthode selon l'invention permet la surveillance sismique d'une zone souterraine telle qu'un gisement souterrain de stockage de fluides. Elle comporte le couplage de moyens de réception d'ondes élastiques avec la zone, et elle est caractérisée en ce qu'elle comporte :
- l'installation pour la durée de surveillance de la zone d'au moins un dispositif d'émission d'ondes sismiques dans un milieu solide, ce dispositif comportant un vibrateur électro-mécanique pourvu d'un pavillon couplé avec une seule surface de ce milieu solide, des moyens vibratoires comportant au moins deux transducteurs électromécaniques avec chacun au moins un élément moteur allongé, chaque élément moteur du premier transducteur reliant rigidement le pavillon à une plaque-relais et chaque élément moteur du deuxième transducteur étant, par une première extrémité, fixé rigidement à la plaque-relais, et par son extrémité opposée, relié à une deuxième plaque laquelle est disposée entre le pavillon et la plaque-relais, cette deuxième plaque étant une masse d'inertie suffisamment lourde,
- l'installation d'un réseau de câbles électriques connectés aux transducteurs de chaque vibrateur ; et
- la connexion des câbles de ce réseau à une station centrale comprenant au moins un générateur d'excitation adapté à appliquer respectivement aux transducteurs, des signaux vibratoires déphasés les uns par rapport aux autres, de façon à mettre sensiblement en phase les déplacements de la plaque relais et du pavillon et maximiser le mouvement relatif du pavillon par rapport à la masse d'inertie, des moyens de connexion sélective du vibrateur de chaque dispositif par l'intermédiaire de ce réseau de câbles électriques, et des moyens d'enregistrement des signaux émanant de la
- zone souterraine en réponse aux ondes élastiques transmises sélectivement dans le sol par les vibrateurs.

Les vibrateurs sont placés de préférence dans des cavités ménagées dans le sol et les récepteurs d'ondes élastiques couplés avec la formation dans un ou plusieurs puits forés dans la formation, dont les emplacements sont ou non distincts des cavités. Ils sont couplés avec la cavité de façon appropriée pour générer dans les formations des ondes longitudinales ou transversales.

Pour des opérations de surveillance sismique d'une zone souterraine, on peut répartir une pluralité d'ensembles de vibrateurs et de récepteurs et procéder à des cycles de surveillance avec excitation des différents vibrateurs (successivement ou simultanément suivant des modes particuliers) et enregistrement des ondes renvoyées par les formations en réponse aux ondes émises, reçues par différents récepteurs.

Le vibrateur selon l'invention peut être utilisé aussi bien dans le cadre d'opérations de prospection sismique à terre que d'opérations de surveillance sismique à terre ou au fond d'une masse d'eau.

Du fait de sa robustesse et de sa compacité, le vibrateur selon l'invention peut facilement être installé à demeure dans une cavité ménagée dans le sol et excité par intermittence par l'intermédiaire du réseau, dans le cadre d'opérations périodiques de surveillance de la zone souterraine, ou bien être utilisé pour des opérations de prospection sismique.

D'autres caractéristiques et avantages du vibrateur selon l'invention, apparaîtront à la lecture de la description ci-après d'exemples non limitatifs de réalisation où les transducteurs sont de type piézo-électrique, en se référant aux dessins annexés où :
- la Fig.1 montre une vue schématique en coupe d'un premier mode de réalisation du vibrateur selon l'invention, dont les éléments moteurs sont des piliers d'éléments sensibles piézo-électriques ;
- la Fig.2 est une vue de dessus en coupe suivant CC du même vibrateur, montrant l'agencement respectifs des piliers des deux transducteurs piézo-électriques ;
- la Fig.3 montre schématiquement un troisième mode de réalisation du vibrateur avec deux transducteurs coaxiaux ;
- la Fig.4 montre schématiquement un quatrième mode de réalisation du vibrateur avec deux transducteurs coaxiaux ;
- la Fig.5 est un schéma de principe illustrant un mode de réalisation où le vibrateur comporte deux couples de transducteurs piézo-électriques imbriqués ;
- la Fig.6 montre schématiquement un premier exemple d'agencement de surveillance sismique périodique d'une zone souterraine ;
- la Fig.7 montre une installation multi-sources multi-puits de surveillance sismique périodique d'une zone souterraine ; et
- la Fig.8 montre schématiquement un exemple de vibrateur comportant un nombre impair de transducteurs.

Le vibrateur V selon l'invention est réalisé par couplage mécanique de transducteurs comprenant chacun plusieurs piliers constitués chacun de façon connue en soi par empilement d'éléments sensibles, électriquement connectés en série, de type piézo-électrique par exemple.

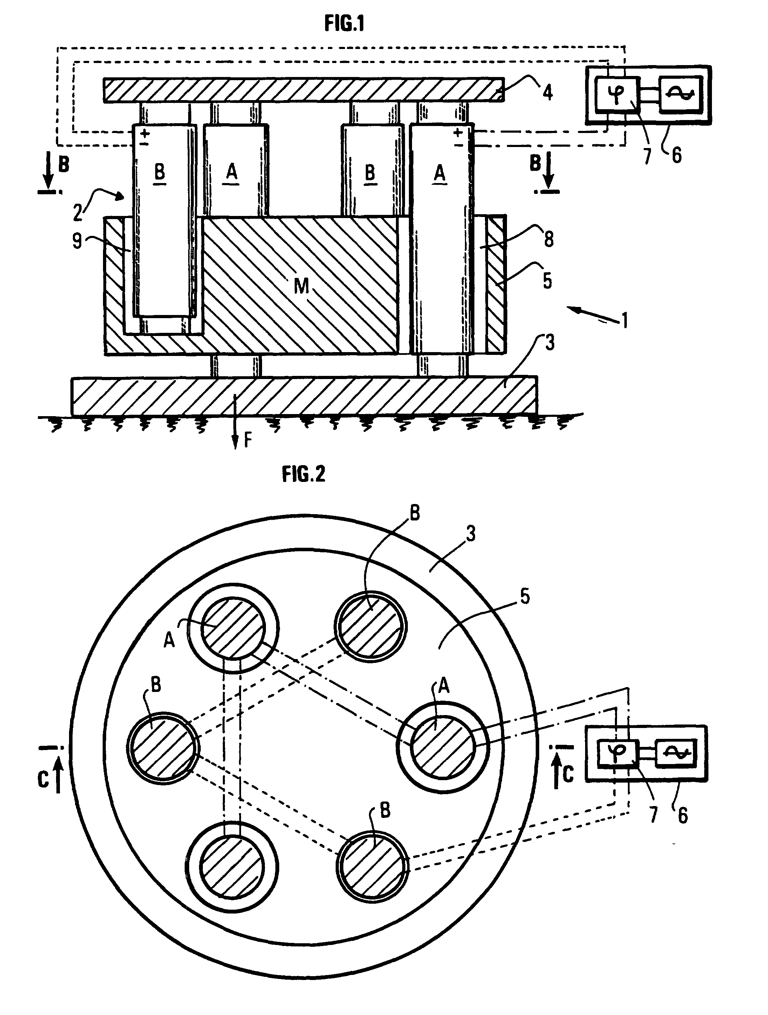

Le mode de réalisation des Fig.1, 2 comporte deux transducteurs 1, 2 montés en opposition incluant chacun plusieurs piliers constitués de disques empilés. Une première extrémité de chaque pilier A du premier transducteur piézo-électrique 1, est fixée rigidement, à un pavillon (plaque de base) 3 adapté à être plaqué contre la surface du sol ou le fond d'un trou. A leur extrémité opposée, les piliers A sont fixés rigidement à une plaque-relais 4. Chaque pilier B du deuxième transducteur piézo-électrique 2 est fixé rigidement par une première extrémité à la plaque-relais 4 et par son extrémité opposée, à une masse d'inertie 5 suffisamment lourde. L'agencement est tel que la masse d'inertie 5 est suspendue à la plaque-relais 4 par les piliers B du deuxième transducteur piézo-électrique 2, la plaque-relais 4 étant elle-même supportée par les piliers A reposant sur le pavillon 3.

Les piliers de chaque transducteur piézo-électrique 1 ou 2 sont électriquement connectés en parallèle à un générateur de signal vibratoire 6 comportant des moyens de déphasage 7. Les deux transducteurs piézo-électriques 1, 2 sont connectés par l'intermédiaire de ces moyens de déphasage 7, de façon que leurs vibrations respectives se conjugent. L'amplitude des déplacements appliquée du pavillon 3 par rapport à la masse d'inertie 5 est maximale quand les deux transducteurs sont alimentés en opposition de phase.

Par cette conjonction de transducteurs 1, 2 avec des piliers de longueur moyenne, on obtient la même force et la même élongation que celles obtenues avec un transducteur unique utilisant des longs piliers en céramique plus fragiles. Le montage réalisé qui ramène la masse d'inertie au voisinage du pavillon, permet d'obtenir un vibrateur compact et plus stable.

La combinaison de deux transducteurs présente un autre avantage si l'on utilise des moyens de connexion permettant de les alimenter séparément depuis le générateur 6. En faisant varier l'amplitude des signaux délivrés aux deux transducteurs 1, 2 respectivement, ainsi que le déphasage que leur appliquent les moyens de déphasage 7, on peut corriger la courbe de réponse du vibrateur et en particulier égaliser son spectre de fréquence.

De préférence, des ouvertures 8 sont ménagées au travers de la masse d'inertie 5 permettant le libre passage des piliers A du premier transducteur piézo-électrique 1 reliant le pavillon 3 à la plaque-relais 4. De cette façon on réduit la surface au sol du vibrateur ainsi que les dimensions de la plaque-relais ce qui la rend plus rigide. De préférence comme indiqué sur la Fig.2, les piliers des deux transducteurs 1, 2 sont répartis à intervalles angulaires réguliers les uns par rapport aux autres.

On gagne en hauteur également en ménageant des cavités 9 dans la masse d'inertie 5 de façon qu'une partie de la longueur des piliers B du deuxième transducteur piézo-électrique 2 soit logée dans son épaisseur.

La tension délivrée par le générateur 6 peut être modulée en fréquence et/ou en amplitude de manière à mettre en oeuvre des techniques connues d'exploration sismique utilisant des vibrateurs à fréquence glissante.

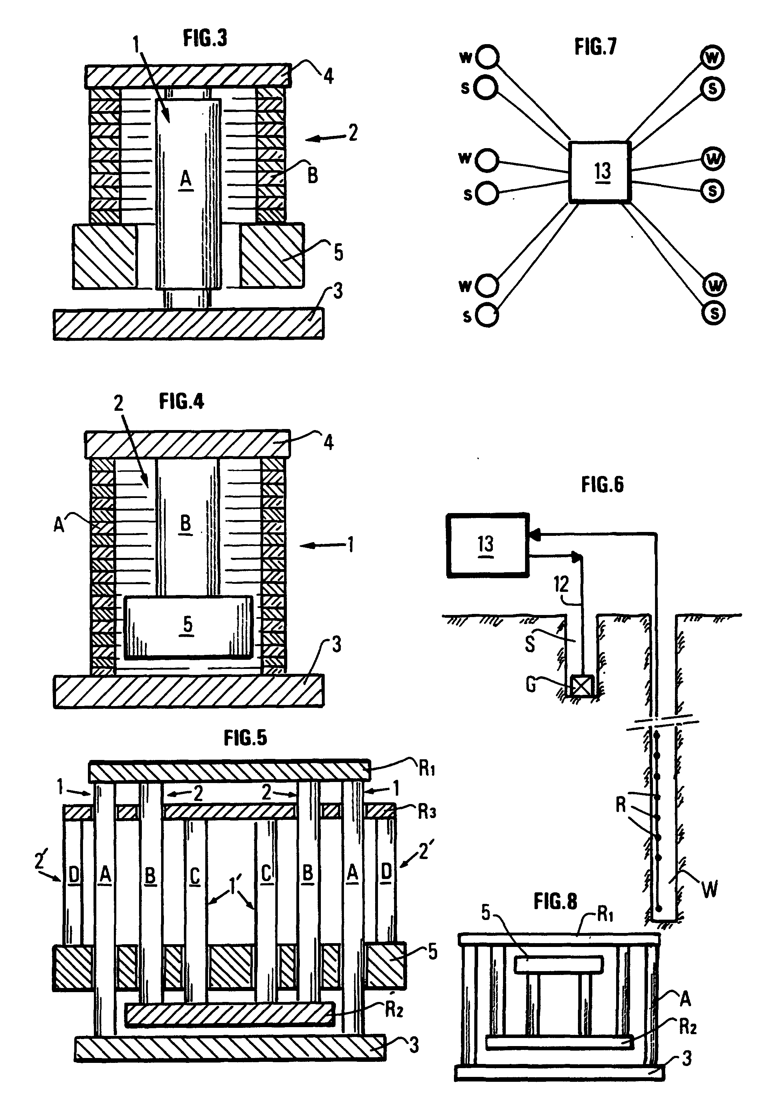

Les transducteurs 1, 2 peuvent également être disposés concentriquement comme le montrent les Fig.3, 4.

Suivant le mode de réalisation de la Fig.3, le pavillon 3 est couplé avec la plaque-relais 4 par un pilier central unique A constitué par empilement de disques sensibles. Le couplage entre la plaque-relais 4 et la masse d'inertie 5 est assuré par un empilement B de disques annulaires disposé autour du pilier central A. La masse d'inertie 5 comporte un évidemment central 11 permettant le libre passage du pilier central A.

Suivant le mode de réalisation de la Fig.4, c'est un empilement A de disques annulaires qui relie rigidement le pavillon 3 et la plaque-relais 4 alors que la liaison entre celle-ci et la masse d'inertie 5 est réalisée par un pilier B passant à l'intérieur de l'empilement A.

Suivant le mode de réalisation de la Fig.5, on peut également utiliser un deuxième couple de transducteurs associé au premier, permettant par un double renvoi, de ramener la masse 5 au voisinage du pavillon 3. Dans un tel agencement, un premier jeu de piliers A relie le pavillon 3 à une première plaque-relais R1, un deuxième jeu de piliers B relie en sens contraire la première plaque relais R1 à une deuxième plaque relais R2, elle-même reliée par un jeu de piliers C à une troisième plaque-relais R3, à proximité de la première plaque relais R1. Des piliers D enfin relient la troisième plaque-relais R3 à la masse d'inertie 5, au voisinage de la deuxième plaque-relais et du pavillon 3.

Avec un tel agencement de quatre transducteurs excités séparément en amplitude et convenablement déphasés les uns par rapport aux autres, on accroît les possibilités de réglage de la courbe de réponse globale du vibrateur.

La disposition décrite des points d'implantation des piliers des transducteurs respectivement entre la plaque-relais (4, R1) d'une part et le pavillon 3 et la masse d'inertie 5 n'est pas limitative. On peut choisir tout autre positionnement des différents piliers les uns par rapport aux autres, permettant de ramener la masse d'inertie au voisinage de la surface de couplage du vibrateur avec le sol.

Dans des applications où la stabilité du vibrateur que l'on obtient comme on l'a vu en ramenant la masse d'inertie 5 au voisinage du pavillon 3, n'est pas particulièrement recherchée, il est possible sans sortir du cadre de l'invention, d'utiliser un nombre impair de transducteurs comme illustré schématiquement à la Fig.8. Les piliers A d'un premier transducteur relient le pavillon 3 à une première plaque-relais R1. D'un même côté de cette première plaque-relais, les piliers B d'un deuxième transducteur la relie à une deuxième plaque-relais R2. La masse d'inertie 5 est reliée à la deuxième plaque-relais R2 par des piliers C d'un troisième transducteur, disposés du même côté de celle-ci que les piliers B.

Le vibrateur, tel qu'il a été décrit, peut être utilisé comme source permanente dans le cadre de méthodes de surveillance sismique d'un gisement souterrain décrites par exemple dans les brevets FR 2.674.029 (US 5,243,562), EP 0.748.457 (US 5,724,311) ou la demande de brevet FR 98/02.170 où l'on installe à demeure sur un site d'exploitation des récepteurs sismiques et une ou plusieurs sources d'ondes élastiques couplées avec des moyens d'alimentation en énergie, de façon à effectuer des relevés sismiques périodiques.

Des vibrateurs G tels que ceux décrits ci-dessus, peuvent (Fig.6) être facilement couplés avec la surface ou installés au voisinage de la surface. On les installe de préférence dans des cavités souterraines S assez profondes (quelques dizaines de mètres par exemple).

Le pavillon 3 du vibrateur peut être mis en contact avec le fond et/ou avec les parois de façon à générer dans les formations environnantes selon les cas des ondes longitudinales ou des ondes transversales ou de cisaillement.

Chaque vibrateur est relié par des câbles électriques 12 éventuellement enterrés, à un générateur de signaux vibratoires dans une station centrale 13 adaptée par ailleurs à collecter et enregistrer les signaux captés par des moyens de réception R, descendus dans un ou plusieurs puits W en réponse aux signaux vibratoires émis.

Les puits W peuvent être forés spécialement pour y installer des récepteurs R, sur une profondeur de quelques centaines de mètres. Un ou plusieurs d'entre eux peuvent également être des puits d'exploitation de la zone souterraine, les récepteurs étant installés derrière un tube de cuvelage (casing) ou bien encore associés à un tubing d'exploitation du puits.

Chaque cavité peut être formée par élargissement d'un puits W pour récepteurs à sa partie supérieure, ou être creusée à quelques mètres de la gueule d'un puits. Pour les applications où la cavité d'installation est traversée par un tubing d'exploitation d'une zone souterraine, on utilise un vibrateur adapté à être placé autour de lui. A cet effet, le pavillon 3, la masse d'inertie 5 et chaque plaque-relais 4 d'un tel vibrateur sont pourvus d'une ouverture centrale permettant le passage du tubing.

Suivant le mode de mise en oeuvre schématisé à la Fig.7, on creuse plusieurs couples de puits W et de cavités S tels que ceux de la Fig.6, à distance les uns des autres sur toute la zone souterraine à surveiller.

Les vibrateurs peuvent être excités successivement. Les signaux sismiques reçus en réponse aux ondes émises par un vibrateur sont captés par les récepteurs R dans les différents puits et corrélés avec les ondes sismiques émises.

Les vibrateurs peuvent aussi être actionnés simultanément à condition d'être excités chacun à tout instant par des signaux spécifiques obtenus par glissement continu de fréquence ou bien par une variation discontinue à codage binaire comme dans le brevet FR 2 589 587 déjà cité, de façon que l'on puisse, par corrélation avec les signaux reçus dans les différents puits W, identifier le lieu de leur émission.

On a décrit des applications du vibrateur selon l'invention à terre. Il est bien évident cependant qu'il peut être couplé avec le fond d'une masse d'eau pour des opérations de surveillance sismique de zones souterraines.

Il peut également être utilisé pour des opérations de prospection sismique.

## Revendications

1. Dispositif pour émettre des ondes sismiques dans un milieu solide comportant un vibrateur électro-mécanique pourvu d'un pavillon (3) destiné à être couplé en opération avec une seule surface de ce milieu solide, des moyens vibratoires comportant au moins deux transducteurs électromécaniques (1, 2) avec chacun au moins un élément moteur allongé, chaque élément moteur (A) du premier transducteur (1) reliant rigidement le pavillon (3) à une plaque-relais (4, R1) et chaque élément moteur (B) du deuxième transducteur (2) étant, par une première extrémité, fixé rigidement à la plaque-relais (4, R1), et par son extrémité opposée, relié à une deuxième plaque (5) laquelle est disposée entre le pavillon (3) et la plaque-relais (4, R1), et un générateur d'excitation (6, 7), **caractérisé en ce que** la deuxième plaque (5) est une masse d'inertie suffisamment lourde, le générateur d'excitation (6, 7) est adapté à appliquer respectivement aux transducteurs, des signaux vibratoires déphasés les uns par rapport aux autres, de façon à mettre sensiblement en phase les déplacements de la plaque relais et du pavillon et maximiser le mouvement relatif du pavillon par rapport à la masse d'inertie (5).

2. Dispositif selon la revendication 1, **caractérisé en ce que** le vibrateur comporte un couple de transducteurs (1, 2) disposés d'un même côté d'une plaque-relais (4, R1) et couplés rigidement à elle, chaque élément moteur (B) du deuxième transducteur (2) connectant directement la plaque-relais (4) à la masse d'inertie (5).

3. Dispositif selon la revendication 1, **caractérisé en ce que** le vibrateur comporte au moins deux couples de transducteurs (1, 2), (1', 2'), les transducteurs de chaque couple étant disposés d'un même côté d'une plaque-relais (R1, R3) et couplés rigidement à elle, chaque élément moteur (B) du deuxième transducteur (2) du premier couple étant, par une première extrémité, connecté rigidement à la plaque-relais (D1) et par son extrémité opposée, relié à la masse d'inertie (5) par l'intermédiaire des éléments moteurs (C, D) du deuxième couple (1', 2') de transducteurs et de plaques-relais (R2, R3).

4. Dispositif selon l'une des revendications précédentes, **caractérisé en ce que** chaque transducteur comporte plusieurs éléments moteurs disposés parallèlement les uns aux autres et connectés en parallèle aux moyens de déphasage (7).

5. Dispositif selon l'une des revendications précédentes, **caractérisé en ce qu'**au moins un évidement (8) est ménagé au travers de la masse d'inertie (5) permettant le libre passage d'éléments moteurs (A, B, C) d'au moins un transducteur.

6. Dispositif selon l'une des revendications précédentes, **caractérisé en ce qu'**au moins un logement (9) est ménagé de la masse d'inertie (5) de façon qu'une partie de la longueur des éléments moteurs (B, D) d'au moins un autre transducteur soit logée dans son épaisseur.

7. Dispositif selon l'un des revendications précédentes, **caractérisé en ce qu'**il comporte des moyens pour exciter séparément les transducteurs avec des signaux d'excitation modulables en amplitude et en phase, de manière à égaliser la réponse en fréquence du vibrateur.

8. Dispositif selon la revendication 1, **caractérisé en ce qu'**il comporte au moins trois transducteurs électromécaniques interconnectant le pavillon (3) et la masse d'inertie (5), ces transducteurs étant reliés les uns aux autres par l'intermédiaire d'au moins deux plaques-relais, le générateur d'excitation (6) étant connecté aux différents transducteurs par l'intermédiaire de moyens de déphasage (7) adaptés à leur appliquer respectivement des signaux d'excitation déphasés les uns par rapport aux autres de façon à conjuguer les signaux vibratoires émis par les différents transducteurs.

9. Dispositif selon l'un des revendications précédentes, **caractérisé en ce que** le pavillon (3), la masse d'inertie (5) et chaque plaque-relais (4) comporte un évidemment pour le passage d'un tube.

10. Dispositif selon l'un des revendications précédentes, **caractérisé en ce que** les éléments moteurs sont de type piézo-électrique ou magnétostrictif.

11. Méthode de surveillance sismique d'une zone souterraine telle qu'un gisement souterrain de stockage de fluides, comportant le couplage de moyens (R) de réception d'ondes élastiques avec la zone, **caractérisée en ce qu'**elle comporte :
- l'installation pour la durée de surveillance de la zone d'au moins un dispositif d'émission d'ondes sismiques dans un milieu solide, comportant un vibrateur (V) électro-mécanique pourvu d'un pavillon (3) couplé avec une seule surface de ce milieu solide, des moyens vibratoires comportant au moins deux transducteurs électromécaniques (1, 2) avec chacun au moins un élément moteur allongé, chaque élément moteur (A) du premier transducteur (1) reliant rigidement le pavillon (3) à une plaque-relais (4, R1) et chaque élément moteur (B) du deuxième transducteur (2) étant, par une première extrémité, fixé rigidement à la plaque-relais (4, R1), et par son extrémité opposée, relié à une deuxième plaque (5) laquelle est disposée entre le pavillon (3) et la plaque-relais (4, R1), cette deuxième plaque (5) étant une masse d'inertie suffisamment lourde;
- l'installation d'un réseau de câbles électriques (12) connectés aux transducteurs (1, 2) de chaque vibrateur (V) ; et
- la connexion des câbles (12) de ce réseau à une station centrale (13) comprenant au moins un générateur d'excitation (6, 7) adapté à appliquer respectivement aux transducteurs (1, 2), des signaux vibratoires déphasés les uns par rapport aux autres, de façon à mettre sensiblement en phase les déplacements de la plaque relais et du pavillon et maximiser le mouvement relatif du pavillon par rapport à la masse d'inertie (5), des moyens de connexion sélective du vibrateur (V) de chaque dispositif par l'intermédiaire de ce réseau de câbles électriques (12), et des moyens d'enregistrement des signaux émanant de la zone souterraine en réponse aux ondes sismiques transmises sélectivement dans le sol par le vibrateur de chaque dispositif.

12. Méthode selon la revendication 11, **caractérisée en ce qu'**elle comporte l'installation d'au moins un vibrateur (V) dans au moins une cavité (S) ménagée dans le sol et son couplage avec les formations environnant la cavité, de façon a y générer des ondes longitudinales ou transversales.

13. Méthode selon l'une des revendications 11 ou 12, **caractérisée en ce qu'**elle comporte le couplage de récepteurs (R) d'ondes élastiques dans au moins un puits (W) foré dans la formation.

14. Méthode selon la revendication 11, **caractérisée en ce qu'**elle comporte la répartition dans la zone de plusieurs ensembles de vibrateurs (V) et de récepteurs (R) couplés à la formation sous la surface et la réalisation de cycles de surveillance avec excitation des différents vibrateurs et enregistrement des ondes renvoyées par la formation en réponse aux ondes émises par les vibrateurs et reçues par différents récepteurs.

15. Méthode selon la revendication 14, **caractérisée** en ce les différents vibrateurs (V) sont actionnés successivement.

16. Méthode selon la revendication 14, **caractérisée en ce que** les différents vibrateurs (V) sont excités par des signaux spécifiques et actionnés simultanément.

17. Application du dispositif selon l'une des revendications 1 à 10 à la prospection sismique.

## Patentansprüche

1. Vorrichtung zum Aussenden seismischer Wellen in einem festen Medium, die einen elektromechanischen Vibrator, versehen mit einem Schalltrichter, einem sog. "pavillon" (3), umfasst, der dazu bestimmt ist, im Betrieb mit einer einzigen Fläche dieses festen Mediums gekoppelt zu werden, weiterhin Vibrationsmittel, die wenigstens zwei elektromechanische Wandler (1, 2) umfassen, jeder mit wenigstens einem länglichen Antriebselement, wobei jedes Antriebselement (A) des ersten Wandlers (1) steif den Schalltrichter (3) mit einer Relaisplatte (4, R1) verbindet und jedes Antriebselement (B) des zweiten Wandlers (2) über ein erstes Ende starr mit der Relaisplatte (4, R1) und mit dem gegenüber liegenden Ende mit einer zweiten Platte (5) verbunden ist, die zwischen dem Schalltrichter (3) und der Relaisplatte (4, R1) angeordnet ist und mit einem Erregungsgenerator (6, 7), **dadurch gekennzeichnet, dass** die zweite Platte (5) eine ausreichend schwere Trägheitsmasse ist, wobei der Erregungsgenerator (6, 7) so ausgelegt ist, dass er jeweils an die Wandler bezüglich einander phasenverschobene Vibrationssignale derart legt, dass im Wesentlichen die Verschiebungen der Relaisplatte und des Schalltrichters in Phase gesetzt sind und die Relativbewegung des Schalltrichters bezüglich der Trägheitsmasse (5) maximiert wird.

2. Vorrichtung nach Anspruch 1, **dadurch gekennzeichnet, dass** der Vibrator ein Paar von Wandlern (1, 2) umfasst, die auf ein und der gleichen Seite eine Relaisplatte (4, R1) angeordnet und steif mit ihr gekoppelt sind, wobei jedes Antriebselement (B) des zweiten Wandlers (3) direkt die Relaisplatte (4) mit der Trägheitsmasse (5) verbindet.

3. Vorrichtung nach Anspruch 1, **dadurch gekennzeichnet, dass** der Vibrator wenigstens zwei Paare von Wandlern (1, 2), (1', 2') umfasst, die Wandler jedes Paares auf ein und der gleichen Seite einer Relaisplatte (R1, R3) angeordnet und steif mit ihr gekoppelt sind, und jedes Antriebselement (B) des zweiten Wandlers (2) des ersten Paares über ein erstes Ende steif mit der Relaisplatte (D1) verbunden ist und mit dem gegenüber liegenden Ende an die Trägheitsmasse (5) vermittels der Antriebselemente (C, D) des zweiten Paares (1', 2') von Wandlern und Relaisplatten (R2, R3), angeschlossen ist.

4. Vorrichtung nach einem der vorhergehenden Ansprüche, **dadurch gekennzeichnet, dass** jeder Wandler mehrere Antriebselemente umfasst, die parallel zueinander angeordnet und parallel mit den Phasenverschiebungsmitteln (7) verbunden sind.

5. Vorrichtung nach einem der vorhergehenden Ansprüche, **dadurch gekennzeichnet, dass** wenigstens eine Ausnehmung (8) durch die Trägheitsmasse hindurch vorgesehen ist, die den freien Durchgang der Antriebselemente (A, B, C) wenigstens eines Transducers bzw. Wandlers ermöglicht.

6. Vorrichtung nach einem der vorhergehenden Ansprüche, **dadurch gekennzeichnet, dass** wenigstens ein Lager (9) bezüglich der Trägheitsmasse (5) derart vorgesehen ist, dass ein Teil der Länge der Antriebselemente (B, D) wenigstens eines anderen Wandlers in Richtung ihrer Dicke gelagert ist.

7. Vorrichtung nach einem der vorhergehenden Ansprüche, **dadurch gekennzeichnet, dass** sie Mittel zur gesonderten Erregung der Wandler mit amplituden- und phasenmodullierbaren Erregungssignalen derart umfasst, dass das Frequenzansprechverhalten des Vibrators egalisiert wird.

8. Vorrichtung nach Anspruch 1, **dadurch gekennzeichnet, dass** sie wenigstens drei elektromagnetische Wandler umfasst, die den Schalltrichter (3) und die Trägheitsmasse (5) miteinander verbinden, wobei diese Wandler oder Transducer miteinander vermittels wenigstens zweier Relaisplatten verbunden sind, der Erregungsgenerator (6) mit den unterschiedlichen Wandlern vermittels Phasenverschiebungsmitteln (7) verbunden ist, die so ausgelegt sind, dass an sie jeweils Erregersignale gelegt werden, die bezüglich einander derart phasenverschoben sind, dass die durch die unterschiedlichen Wandler ausgesandten Vibrationssignale konjugiert werden.

9. Vorrichtung nach einem der vorhergehenden Ansprüche, **dadurch gekennzeichnet, dass** der Schalltrichter (3), die Trägheitsmasse (5) und jede Relaisplatte (4) eine Ausnehmung für den Durchgang eines Rohres umfasst.

10. Vorrichtung nach einem der vorhergehenden Ansprüche, **dadurch gekennzeichnet, dass** die Antriebselemente vom piezoelektrischen oder magnetostriktiven Typ sind.

11. Verfahren zur seismischen Überwachung einer unterirdischen Zone beispielsweise einer unterirdischen Lagerstätte für die Lagerung von Fluiden, die Kopplung von Mitteln (R) zum Empfang elastischer Wellen mit der Zone umfassend, **dadurch gekennzeichnet, dass** sie umfasst:
a. die Installation über die Dauer der Überwachung der Zone wenigstens einer Emissionsvorrichtung für seismische Wellen in einem festen Medium, mit einem elektromagnetischen Vibrator (V), der mit einem Schalltrichter (3) verbunden ist, welcher mit einer einzigen Oberfläche dieses festen Mediums gekoppelt ist, Vibrationsmittel, die wenigstens zwei elektromagnetische Wandler (1, 2) umfassen, wobei jeder wenigstens ein längliches Motorelement aufweist und jedes Antriebselement (A) des ersten Wandlers (1) steif den Schalltrichter (3) mit einer Relaisplatte (4, R1) verbindet und jedes Antriebselement (B) des zweiten Wandlers (2) vermittels eines ersten Endes steif mit der Relaisplatte (4, R1) und mit dem gegenüber liegenden Ende mit einer zweiten Platte (5) verbunden ist, die zwischen dem Schalltrichter (3) und der Relaisplatte (4, R1) angeordnet ist, wobei diese zweite Platte (5) eine ausreichend schwere Trägheitsmasse hat;
b. die Installation eines Netzes elektrischer Kabel (12), die mit den Wandlern (1, 2) jedes Vibrators (V) verbunden sind; und
c. die Verbindung der Kabel (12) dieses Netzes mit einer zentralen Station (13), die wenigstens einen Erregergenerator (6, 7) umfasst, der so ausgelegt ist, dass er jeweils an die Wandler (1, 2) bezüglich einander phasenverschobene Vibrationssignale legt, derart, dass im Wesentlichen die Verschiebungen der Relaisplatte und des Schalltrichters in Phase gebracht werden und die Relativbewegung des Schalltrichters bezüglich der Trägheitsmasse (5) maximiert wird, Mittel zur selektiven Verbindung des Vibrators (V) jeder Vorrichtung vermittels dieses Netzes elektrischer Kabel (12) und Mittel zum Aufzeichnen der Signale, die aus der unterirdischen Zone kommen, in Abhängigkeit von seismischen Wellen, die selektiv in den Erdboden über den Vibrator jeder Vorrichtung übertragen wurden.

12. Verfahren nach Anspruch 11, **dadurch gekennzeichnet, dass** es die Installation wenigstens eines Vibrators (V) in wenigstens einem Hohlraum (S) umfasst, der im Erdboden ausgespart ist und seine Kopplung mit den Formationen umfasst, welche den Hohlraum umgeben, derart, dass hierin longitudinale oder transversale Wellen erzeugt werden.

13. Verfahren nach einem der Ansprüche 11 oder 12, **dadurch gekennzeichnet, dass** es die Kopplung der Empfänger (R) für elastische Wellen in wenigstens einem in die Formation gebohrten Bohrloch (W) umfasst.

14. Verfahren nach Anspruch 11, **dadurch gekennzeichnet, dass** es die Verteilung in der Zone von mehreren Vibrationsanordnungen (V) und von Empfängern (R) umfasst, die mit der Formation unter der Oberfläche gekoppelt sind und die Realisation von Überwachungszyklen unter Erregung der verschiedenen Vibratoren und die Aufzeichnung der durch die Formation in Abhängigkeit von den durch die Vibratoren ausgesandten und von ihr zurückgesandten Wellen, die durch die verschiedenen Empfänger empfangen wurden, umfasst.

15. Verfahren nach Anspruch 14, **dadurch gekennzeichnet, dass** die verschiedenen Vibratoren (V) nacheinander betätigt werden.

16. Verfahren nach Anspruch 14, **dadurch gekennzeichnet, dass** die verschiedenen Vibratoren (V) durch spezifische Signale erregt und gleichzeitig betätigt werden.

17. Anwendung der Vorrichtung nach einem der Ansprüche 1 bis 10 auf die seismische Prospektion.

## Claims

1. Device for transmitting seismic waves in a solid medium including an electromechanical vibrator provided with a contact plate (3) intended to be operatively coupled to a single surface of this solid medium, vibratory means including at least two electromechanical transducers (1, 2), each with an elongate drive element, each drive element (A) of the first transducer (1) rigidly connecting the contact plate (3) to a relay plate (4, R1) and each drive element (B) of the second transducer (2) being, by a first end, fixed rigidly to the relay-plate (4, R1) and by its opposite end connected to a second plate (5) which is arranged between the contact plate (3) and the relay plate (4, R1), and an excitation generator (6, 7), ***characterised by** the fact that* the second plate (5) is a sufficiently heavy inertia mass, the excitation generator (6, 7) is suitable to apply respectively to the transducers vibratory signals out of phase with each other so as to render substantially in phase the displacements of the relay plate and of the contact plate and maximise the relative movement of the contact plate and the inertia mass (5).

2. Device as described in claim 1, ***characterised by** the fact that* the vibrator includes a pair of transducers (1, 2) arranged on a same side of a relay plate (4, R1) and rigidly coupled to it, each drive element (B) of the second transducer (2) directly connecting the relay plate (4) to the inertia mass (5).

3. Device as described in claim 1, ***characterised by** the fact that* the vibrator includes at least two pairs of transducers (1, 2), (1', 2'), the transducers of each pair being arranged on a same side of a relay plate (R1, R3) and rigidly coupled to it, each drive element (B) of the second transducer (2) of the first pair being, by a first end, rigidly connected to the relay plate (D1) and by its opposite end connected to the inertia mass (5) by means of the drive elements (C, D) of the second pair (1' , 2') of transducers and relay plates (R2, R3).

4. Device as described in one of the preceding claims, ***characterised by** the fact that* each transducer includes a plurality of drive elements arranged parallel with each other and connected in parallel to the phase difference creation means (7).

5. Device as described in one of the preceding claims, ***characterised by** the fact that* at least one cavity (8) is formed through the inertia mass (5) allowing free passage of drive elements (A, B, C) of at least one transducer.

6. Device as described in one of the preceding claims, ***characterised by** the fact that* at least one housing (9) is formed in the inertia mass (5) so that a part of the length of the drive elements (B, D) of at least one other transducer is housed within its thickness.

7. Device as described in one of the preceding claims, ***characterised by** the fact that* it includes means to separately excite the transducers with excitation signals which can be modulated in amplitude and phase, so as to balance the frequency response of the vibrator.

8. Device as described in claim 1, ***characterised by** the fact that* it includes at least three electromechanical transducers interconnecting the contact plate (3) and the inertia mass (5), these transducers being connected to each other by means of at least two relay plates, the excitation generator (6) being connected to the different transducers by means of phase difference creation means (7) suitable to apply to them respectively mutually phase-shifted excitation signals so as to combine the vibratory signals emitted by the different transducers.

9. Device as described in one of the preceding claims, ***characterised by** the fact that* the contact plate (3), the inertia mass (5) and each relay plate (4) includes a cavity for passage of a tube.

10. Device as described in one of the preceding claims, ***characterised by** the fact that* the drive elements are of piezo-electric or magnetostrictive type.

11. Method for seismic monitoring of a sub-surface zone such as a sub-surface deposit storing fluids, including coupling to the zone of means (R) for reception of elastic waves, ***characterised by** the fact that* it includes:
- installation for the duration of monitoring of the zone of at least one device for transmission of seismic waves in a solid medium, including an electromechanical vibrator (V) provided with a contact plate (3) coupled to a single surface of this solid medium, vibratory means including at least two electromechanical transducers (1, 2) each with at least one elongate drive element, each drive element (A) of the first transducer (1) rigidly connecting the contact plate (3) to a relay plate (4, R1) and each drive element (B) of the second transducer (2) being, by a first end, rigidly fixed to the relay plate (4, R1) and by its opposite end connected to a second plate (5) which is arranged between the contact plate (3) and the relay plate (4, R1), this second plate (5) being a sufficiently heavy inertia mass;
- installation of a network of electrical cables (12) connected to the transducers (1, 2) of each vibrator (V); and
- connection of the cables (12) of this network to a central station (13) comprising at least one excitation generator (6, 7) suitable to apply respectively to the transducers (1, 2) vibratory signals out of phase with each other so as to put substantially in phase the displacements of the relay plate and of the contact plate and maximise the relative movement of the contact plate and the inertia mass (5), means for selective connection of the vibrator (V) of each device by means of this network of electrical cables (12), and means for recording the signals emanating from the sub-surface zone in response to the seismic waves selectively transmitted in the ground by the vibrator of each device.

12. Method as described in claim 11, ***characterised by** the fact that* it includes the installation of at least one vibrator (V) in at least one cavity (S) formed in the ground and coupling it to the formations surrounding the cavity, so as to generate longitudinal or transversal waves there.

13. Method as described in one of claims 11 or 12, ***characterised by** the fact that* it includes coupling of receivers (R) of elastic waves in at least one well (W) drilled in the formation.

14. Method as described in claim 11, ***characterised by** the fact that* it includes distribution in the zone of a plurality of sets of vibrators (V) and receivers (R) coupled to the formation below the surface and the creation of monitoring cycles with excitation of the different vibrators and recording of the waves returned by the formation in response to the waves transmitted by the vibrators and received by different receivers.

15. Method as described in claim 14, ***characterised by** the fact that* the different vibrators (V) are actuated in succession.

16. Method as described in claim 14, ***characterised by** the fact that* the different vibrators (V) are excited by specific signals and actuated simultaneously.

17. Application of the device as described in one of claims 1 to 10 to seismic prospecting.
